# EUROPEAN PATENT SPECIFICATION

(11) **EP 3 713 397 B1**
(45) Date of publication and mention of the grant of the patent: **21.02.2024**
(21) Application number: 18840083.2
(22) Date of filing: 21.11.2018
(51) Int. Cl.: A01J 5/04, F04C 28/02

(54) **MILKING SYSTEM WITH VACUUM PUMP CHECK**
MELKSYSTEM MIT VAKUUMPUMPENKONTROLLE
SYSTÈME DE TRAITE AVEC CONTRÔLE DE POMPE À VIDE

(30) Priority: 22.11.2017 NL 2019955
(43) Date of publication of application: 30.09.2020
(73) Proprietor: Lely Patent N.V., 3147 PB Maassluis (NL)
(72) Inventor: MOSTERT, Gerard, 3147 PB Maassluis (NL)
(74) Representative: Octrooibureau Van der Lely N.V.
(86) International application number: PCT/NL2018/050781
(87) International publication number: WO 2019/103606

(56) References cited:
- EP-A2- 1 369 033
- WO-A1-2006/006906
- WO-A1-2008/121051

## Description

The present invention relates to a milking system comprising a plurality of milking devices and a vacuum system with a plurality of vacuum pumps for producing at least an underpressure for milking and pulsation in the plurality of milking devices, wherein the vacuum system comprises a control unit and a plurality of vacuum pumps.
International patent publication WO2006/006906A1 discloses a vacuum source for providing vacuum to at least a first vacuum drain through conduits, comprising at least a first and a second vacuum pump, wherein the vacuum source comprises a control system adapted to detect the consumed airflow, and to control the operation of each of the first and second vacuum pump based on the detected airflow.

Such milking devices are generally known per se. For example, there are herringbone milking parlours, carousel milking parlours and multi-box (robot) milking parlours which each comprise a plurality of milking devices and which are fitted with a plurality of smaller pumps instead of a single, large vacuum pump. As a result thereof, the vacuum system is able to react more quickly to a change in the vacuum demand. In addition, there is often at least one backup pump for the other vacuum pumps in order still to be able to milk if a pump fails.

A drawback of the known systems is the fact that it is difficult or time-consuming to monitor the quality, in particular the maintenance condition, of the vacuum pumps. As a result thereof, it is difficult to predict the need for maintenance, although such preventive maintenance is able to prevent problems during milking.

It is therefore an object of the present invention to improve a milking system of the kind mentioned in the preamble in such a way that improved monitoring of the maintenance condition of the vacuum system is possible and in particular preventive maintenance as well.

To this end, the invention provides a milking system according to Claim 1, comprising a plurality of milking devices for milking dairy animals, with a vacuum system for producing an underpressure for milking and pulsation in the plurality of milking devices, and with a control unit for controlling at least the vacuum system, wherein the vacuum system comprises N vacuum pumps of substantially identical capacity, with N ≥ 3, wherein the vacuum system also comprises a measuring device which is operatively connected to the control unit in order to determine a value of at least one operating vacuum parameter of the vacuum system, wherein the control unit is configured such that, in an automatic test action for at least 2, and preferably for each, of the N vacuum pumps, it: a) switches off said vacuum pump and switches on the other N-1 vacuum pumps; b) determines the value of the operating vacuum parameter of the vacuum system; and c) determines, on the basis of the operating parameter values determined for each vacuum pump which has been switched off, if one of the vacuum pumps requires maintenance and also which vacuum pump requires said maintenance. In this case, use is made of the understanding that different configurations of the pumps in principle have to achieve the same operating state and that it is possible to determine, from the various determined operating parameter values if a vacuum pump still works satisfactorily or requires maintenance. The latter may be performed by analysing the determined operating parameter values. All this will be explained in more detail below. Incidentally, it should be noted here that the expression "switching on the other N-1 vacuum pumps" is understood to mean that the control unit ensures that all these pumps are switched on. Should one or more of these N-1 other pumps already be switched on, then their operational state obviously remains the same.

Further particular embodiments are described in the dependent claims and in the following part of the description.

In particular, the vacuum system with the vacuum pumps is designed to be able to achieve a reference value for the operating vacuum parameter for each subset of N-1 vacuum pumps. In other words, there is in this case always one backup vacuum pump, so that it has to be possible, in principle, to reach the reference value, that is to say a desired empirical value during milking, with N-1 pumps. In case a vacuum pump fails, this reference value can still be achieved by the N-2 pumps which are still working plus the backup vacuum pump which is not yet working. This test configuration offers the advantage that measuring takes place at the relevant operating parameter value during the practical milking. For instance, alternatively, it is possible to provide a vacuum system in which all vacuum pumps are required in order to reach the reference value of the operating parameter desired in practice for milking. During testing, i.e. with one pump less, this value will then often not be reached and then a different, often lower, reference value will have to be used as a benchmark.

The vacuum pumps are substantially identical, that is to say that they should nominally have the same performance, at least their design should be aimed at this performance. It goes without saying that, in practice, a degree of variation may occur, but the manufacturer will keep such tolerances limited and be able to provide information thereon. If the vacuum pumps are thus substantially identical and have a fixed capacity, they will, in principle, in each case deliver the same performance after they are switched on. However, advantageously, adjustable vacuum pumps will often have been provided in practice. In embodiments, the vacuum pumps therefore have a pump capacity which is adjustable by the control unit and the control unit is configured to switch on the N-1 pumps at an identical, in particular maximum, pump capacity. With adjustable pumps, it is obviously necessary to be able to make a good comparison and the pumps each have to deliver the same pump capacity. At maximum pump capacity, the differences in the operating parameter values should, in principle, also be at their maximum. Nevertheless, it may sometimes by advantageous to test all pumps at the same, lower pump capacity, for example because that lower pump capacity is most common in practice and still offers a desired margin at peak load.

The control unit is configured to determine if a vacuum pump requires maintenance and, if so, which pump. In embodiments, the control unit is to this end configured such that it determines at c) that a pump X requires maintenance if either switching off this vacuum pump X and switching on one of the other vacuum pumps, or switching on this vacuum pump X and switching off one of the other pumps results in a change in the operating parameter value by at least a predetermined value or a predetermined percentage. In principle, the measured operating parameter value should be the same, irrespective of which combination of pumps is in operation. If an operating parameter value changes by an excessive amount, in particular by more than is permissible according to the tolerance, the pump which has been switched on or off, respectively, is not working correctly.

In principle, it may already suffice to circuit-test two different combinations of vacuum pumps. The reason for this is that a significant change in the operating parameter value may already occur when one of the vacuum pumps is switched off for the first time and the remaining vacuum pump is switched on. Depending on the increase or decrease in the measured value, it is already possible to determine the pump which requires maintenance or has to be replaced. For the sake of completeness, it is also possible to perform a complete test cycle in which each of the pumps is switched off once, so that all pumps have been assessed.

In particular, the predetermined value or the predetermined percentage comprises a first threshold value or threshold percentage associated with a maintenance indication. Alternatively or additionally, the predetermined value or the predetermined percentage comprises a second threshold value or threshold percentage associated with a replacement indication. In this case, for example, an operating parameter value which changes by 2%, 3%, 5% or any other percentage indicates that the vacuum pump which has been switched on or switched off no longer functions as desired. Depending on the requirements imposed by the user or legislator, a certain percentage may still be permissible although it has resulted in a requirement for maintenance or immediately triggered a replacement indication. In such cases, the total number of pumps may be taken into account, since, if one pump of a total number of for example ten pumps is operating below par, this will lead to a much smaller change than if the total number of pumps is three. Furthermore, the type of parameter may also be important, i.e. with some parameters a greater variation may be acceptable than with others. Furthermore, the magnitude of a(n absolute) threshold value of course depends on the parameter itself.

In embodiments, the operating parameter relates to an air flow rate in the vacuum system. This is an important parameter which forms a clear indication of the overall efficiency of a vacuum system and in particular individual pumps. Alternatively or additionally, it is also possible to use, for example, a vacuum level to be reached as operating parameter and/or the time it takes to reach a predetermined flow rate or vacuum level from start-up.

The invention also relates to a method according to Claim 8 for automatically testing a vacuum system of a milking system, said milking system comprising a plurality of milking devices for milking dairy animals, a vacuum system for producing an underpressure for milking and pulsation in the plurality of milking devices, and a control unit for controlling at least the vacuum system, wherein the vacuum system comprises N vacuum pumps of substantially identical capacity, with N ≥ 3, wherein the vacuum system also comprises a measuring device which is operatively connected to the control unit in order to determine a value of at least one operating vacuum parameter of the vacuum system, wherein the method, for at least 2, and preferably for each, of the N vacuum pumps comprises the steps of the control unit: a) switching off said vacuum pump, and switching on the other N-1 vacuum pumps; b) determining the value of the operating vacuum parameter of the vacuum system; and c) determining, on the basis of the operating parameter values determined for each vacuum pump which has been switched off, if one of the vacuum pumps requires maintenance and also which vacuum pump requires said maintenance.

As this method largely corresponds to the operation of (the control unit of) the above-described milking system according to the invention, details will not be repeated here unnecessarily. However, it will be clear that this method may, in principle, achieve the same advantages as the described milking system. This also applies to the dependent claims which will not be repeated unnecessarily in the following, but which offer the same advantages as the corresponding subclaims of the milking system.

It should however be noted that the method may also, at least partly, be applied very simply between various milking sessions. After all, there is some time between the end of a milking session of one animal and the start of the milking session of the next animal. By now performing at least a part of the (test) method in this intermediate period, it is possible to achieve a virtually continuous and good impression of the maintenance condition. If the intermediate period is too short to test all vacuum pumps in this way, the subsequent intermediate period(s) may be used to test the other pumps.

The invention will be explained below in more detail by means of one or more exemplary embodiments and the drawing, in which:
Fig. 1 shows a highly diagrammatic view of a milking system according to the invention, and
Fig. 2 shows a diagram with results of a measurement according to the method according to the invention.

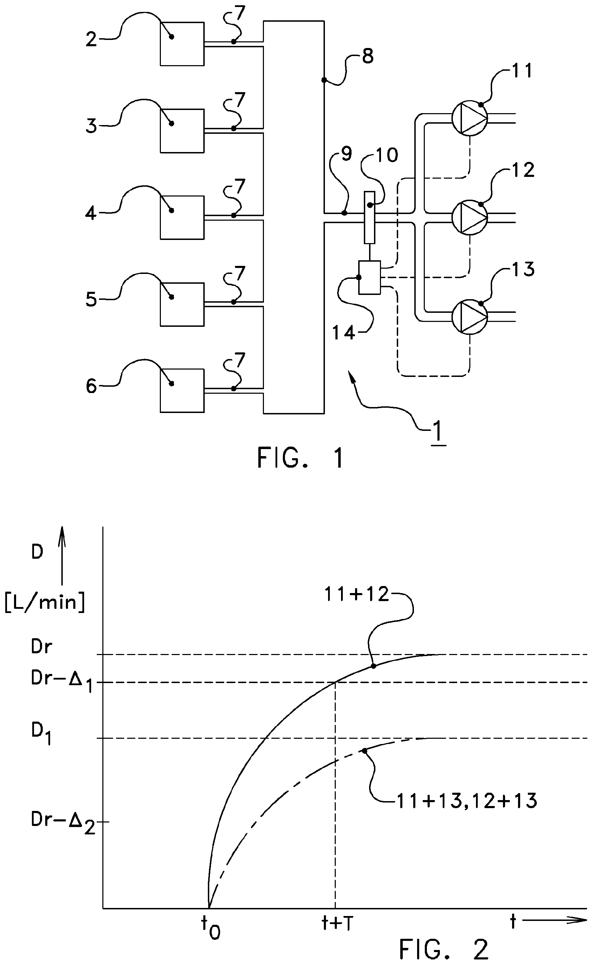

Fig. 1 shows a highly diagrammatic view of a milking system 1 according to the invention, with five milking devices 2-6, each of which has a vacuum connection 7 on a vacuum buffer tank 8 which is connected to a first, second and third vacuum pump 11 resp. 12 and 13, under the control of control unit 14, via a main vacuum line 9 with a flow meter 10.

Here, the highly diagrammatic illustration of the milking system 1 has five milking devices 2 to 6. These milking devices may be robot milking devices or conventional milking devices and may be arranged as individual stalls, herringbone or parallel stalls or as a carousel. Each of the milking devices has a connection for a milking vacuum and a connection for a pulsation vacuum. For the sake of convenience, these connections have in each case been shown combined via the connections 7.

All the vacuum connections end in a vacuum buffer tank 8 (here shown excessively large). This buffer tank 8 serves to prevent vacuum variations in, for example, the milking vacuum of the milking devices 2-6, for example if one or more milking cups are attached or, on the contrary, kicked off, or if one or more milking devices are cleaned. In those cases, the vacuum system experiences (for a short period of time) a much larger air influx which is efficiently absorbed by the vacuum prevailing in the buffer tank 8.

The buffer tank 9 is kept at a desired pressure by means of three similar vacuum pumps 11, 12, 13. The number has been chosen randomly and may also be greater. In the remainder of the description, the number of pumps will in each case be assumed to be three. Preferably, the system 1 is dimensioned such that two of the three pumps suffice in order to reach a correct operating state, for example an underpressure in the buffer tank of 48 kPa, and/or a flow rate in the main vacuum line 9 of 1000 I/minute. The flow rate may be measured, for example, using the flow meter 10. The third pump can then serve as a spare or backup pump, in case one of the other pumps malfunctions.

Now, in practice, the pumps will inevitably suffer from wear, so that maintenance will have to be performed after some time. It is also possible that the pump performance, either expectedly or unexpectedly, deteriorates to such a degree that it should be replaced, in principle, such as by the backup-pump for the time being.

The present invention provides a milking system 1 which can test this automatically in a simple way. To this end, the system runs a test protocol, in which the control unit 14 first switches on a first pair of pumps and switches off the third, for example it switches on the first and second pump 11 and 12 and switches off the third pump 13. The flow meter 10 measures the operating parameter value, in this case the flow rate achieved, until or after a stable operating state has been achieved. Subsequently, the control unit 14 switches off one of the two active pumps, for example the first pump 11, and switches on the other pump, i.e. the third pump 13. Subsequently, the flow meter 10 again measures the flow rate until or when a stable operating state has been reached. If a drop in the flow rate by more than a first predetermined value, for example by more than 5% or more than 50 I/minute, is measured, then the control unit may reach the conclusion that the active pump, in this case pump 13, requires maintenance. However, if the flow rate increases by at least for example 5% or more than 50 l/minute, the control unit may come to the conclusion that the inactive pump, in this case pump 11, requires maintenance or has to be replaced. These steps are then repeated for pump 12, which is switched off, and pump 11, which is switched on. Again, based on the measured flow rate values, the control unit may reach the conclusion that pump 12 requires maintenance or has to be replaced. If the abovementioned measured values deviate by more than a second predetermined threshold value, for example 10% or 100 l/minute, then the control unit may reach the conclusion that the respective pump has to be replaced.

Fig. 2 shows a diagram with results of a measurement according to the method according to the invention, for example as described above. In the diagram, the flow rate D measured by the flow meter 10 is plotted as a function of time, with the top solid line relating to the combination of pumps 11 and 12, and the dash-dotted line relating to the combinations of pumps 11 and 13 and pumps 12 and 13. The graph furthermore shows a reference flow rate Dr and a first threshold value Dr-Δ1 for a maintenance indication and a second threshold value Dr-Δ2 for a replacement indication.

As can be seen, the combined pumps 11 and 12 can quickly reach the reference flow rate value Dr. The control unit is then already able to draw the conclusion that both pumps 11 and 12 are working satisfactorily and do not require maintenance. In addition, it can be seen that if pump 11 is switched off and pump 13 is switched on, only a lower flow rate D1 which is in between the first and second threshold values can be reached. Now, the control unit is able to draw the conclusion that the active pump 13 should be given a maintenance indication. For the sake of completeness, the control unit may also switch off pump 12 and switch on pump 11. In this case, the measured flow rate has the same course, which is to be expected, as the (similar) pumps 11 and 12 both work satisfactorily.

This example concerns the flow rate D to be achieved which should be around the reference value Dr, but in any case over the first threshold value Dr-Δ1, below which the respective pump requires maintenance. If the flow rate D drops below the second threshold value Dr-Δ2, the respective pump has to be replaced. However, it is also possible to investigate another variable. For example, it is possible to investigate how long it takes to reach a threshold flow rate after starting up, also chosen as Dr-Δ1 here. In the illustrated example, pump 11 and pump 12 reach this value after a time T. This time may be compared to a threshold time period in a way which is similar to that of the threshold flow rate value. If, after switching on a pump and switching off another pump, T is exceeded by a predetermined threshold value (as a percentage or an absolute figure), the respective active pump also requires maintenance. Other variables, such as for example pressure levels, may also be used with the method and milking systems according to the invention.

The illustrated embodiments only serve to explain the invention and do not constitute a limitation thereof. The scope of protection is defined by the attached claims.

## Claims

1. Milking system (1) comprising a plurality of milking devices (2-6) for milking dairy animals, with a vacuum system for producing an underpressure for milking and/or pulsation in the plurality of milking devices, and with a control unit (14) for controlling at least the vacuum system,
wherein the vacuum system comprises N vacuum pumps (11, 12, 13) of substantially identical capacity, with N ≥ 3,
wherein the vacuum system also comprises a measuring device (10) which is operatively connected to the control unit in order to determine a value of at least one operating vacuum parameter of the vacuum system,
**characterized in that**
the control unit is configured such that, in an automatic test action for at least 2, and preferably for each, of the N vacuum pumps, it:
a) switches off said vacuum pump and switches on the other N-1 vacuum pumps;
b) determines the value of the operating vacuum parameter of the vacuum system; and
c) determines, on the basis of the operating parameter values determined for each vacuum pump which has been switched off, if one of the vacuum pumps requires maintenance and also which vacuum pump requires said maintenance.

2. Milking system according to Claim 1, wherein the vacuum system with the vacuum pumps is designed to be able to achieve a reference value for the operating vacuum parameter for each subset of N-1 vacuum pumps.

3. Milking system according to Claim 1 or 2, wherein the vacuum pumps have a pump capacity which is adjustable by the control unit and wherein the control unit is configured to switch on the N-1 pumps at an identical, in particular maximum, pump capacity.

4. Milking system according to one of the preceding claims, wherein the control unit is configured to determine at c) that a pump X requires maintenance if either switching off this vacuum pump X and switching on one of the other vacuum pumps, or switching on this vacuum pump X and switching off one of the other pumps results in a change in the operating parameter value by at least a predetermined value or a predetermined percentage.

5. Milking system according to Claim 4, wherein the predetermined value or the predetermined percentage comprises a first threshold value or threshold percentage associated with a maintenance indication.

6. Milking system according to Claim 4 or 5, wherein the predetermined value or the predetermined percentage comprises a second threshold value or threshold percentage associated with a replacement indication.

7. Milking system according to one of the preceding claims, wherein the operating parameter relates to an air flow rate in the vacuum system.

8. Method for automatically testing a vacuum system of a milking system (1), said milking system comprising a plurality of milking devices (2-6) for milking dairy animals, a vacuum system for producing an underpressure for milking and pulsation in the plurality of milking devices, and a control unit (14) for controlling at least the vacuum system,
wherein the vacuum system comprises N vacuum pumps (11-13) of substantially identical capacity, with N ≥ 3,
wherein the vacuum system also comprises a measuring device (10) which is operatively connected to the control unit in order to determine a value of at least one operating vacuum parameter of the vacuum system,
wherein the method, for at least 2, and preferably for each, of the N vacuum pumps
comprises the steps of the control unit:
a) switching off said vacuum pump, and switching on the other N-1 vacuum pumps;
b) determining the value of the operating vacuum parameter of the vacuum system; and
c) determining, on the basis of the operating parameter values determined for each vacuum pump which has been switched off, if one of the vacuum pumps requires maintenance and also which vacuum pump requires said maintenance.

9. Method according to Claim 8, wherein the vacuum system with the vacuum pumps is designed to be able to achieve a reference value for the operating vacuum parameter for each subset of N-1 vacuum pumps.

10. Method according to Claim 8 or 9, wherein step c) comprises determining that a pump X requires maintenance if either switching off this vacuum pump X and switching on one of the other vacuum pumps, or switching on this vacuum pump X and switching off one of the other pumps results in a change in the operating parameter value by at least a predetermined value or a predetermined percentage.

11. Method according to Claim 10, wherein the predetermined value or the predetermined percentage comprises a first threshold value or threshold percentage associated with a maintenance indication.

12. Method according to Claim 10 or 11, wherein the predetermined value or the predetermined percentage comprises a second threshold value or threshold percentage associated with a replacement indication.

13. Method according to one of Claims 8-12, wherein the operating parameter relates to an air flow rate in the vacuum system.

## Patentansprüche

1. Melksystem (1), umfassend das mehrere Melkvorrichtungen (2-6) zum Melken von Milchvieh umfasst, das ein Unterdrucksystem zum Erzeugen eines Unterdrucks zum Melken und/oder einer Pulsation in den mehreren Melkvorrichtungen und eine Steuereinheit (14) zur Steuerung zumindest des Unterdrucksystems,
wobei das Unterdrucksystem N Unterdruckpumpen (11, 12, 13) von im Wesentlichen identischer Kapazität umfasst, wobei N ≥ 3,
wobei das Unterdrucksystem auch eine Messvorrichtung (10) umfasst, die mit der Steuereinheit betriebstechnisch verbunden ist, um einen Wert zumindest eines Betriebsunterdruckparameters des Unterdrucksystems zu bestimmen,
**dadurch gekennzeichnet, dass**
die Steuereinheit derart konfiguriert ist, dass sie in einem automatischen Testaktion für mindestens 2 und vorzugsweise für jede der N Unterdruckpumpen:
a) die Unterdruckpumpe ausschaltet und die anderen N-1 Unterdruckpumpen einschaltet;
b) den Wert des Betriebsunterdruckparameters des Unterdrucksystems bestimmt; und
c) auf der Grundlage der für jede abgeschaltete Unterdruckpumpe bestimmten Betriebsparameterwerte, wenn eine der Unterdruckpumpen Wartung benötigt, und auch, welche Pumpe die Wartung benötigt.

2. Melksystem nach Anspruch 1, wobei das Unterdrucksystem mit den Unterdruckpumpen ausgelegt ist, einen Referenzwert für den Betriebsunterdruckparameter für jede Teilmenge von N-1 Unterdruckpumpen erzielen zu können.

3. Melksystem nach Anspruch 1 oder 2, wobei die Unterdruckpumpen eine Pumpenkapazität aufweisen, die durch die Steuereinheit eingestellt werden kann, und wobei die Steuereinheit konfiguriert ist, die N-1 Pumpen auf der identischen, insbesondere der maximalen, Pumpenkapazität einzuschalten.

4. Melksystem nach einem der vorhergehenden Ansprüche, wobei die Steuereinheit konfiguriert ist, bei c) zu bestimmen, dass eine Pumpe X Wartung benötigt, wenn entweder das Ausschalten dieser Unterdruckpumpe X und das Einschalten einer der anderen Unterdruckpumpen, oder das Einschalten dieser Unterdruckpumpe X und das Ausschalten einer der anderen Pumpen eine Änderung des Betriebsparameterwerts um einen vorgegebenen Wert und/oder einen vorgegebenen Prozentsatz zur Folge hat.

5. Melksystem nach Anspruch 4, wobei der vorgegebene Wert oder der vorgegebene Prozentsatz einen ersten Schwellenwert oder Schwellenwertprozentsatz, der mit einer Wartungsanzeige verbunden ist, umfasst.

6. Melksystem nach Anspruch 4 oder 5, wobei der vorgegebene Wert oder der vorgegebene Prozentsatz einen zweiten Schwellenwert oder Schwellenwertprozentsatz, der mit einer Austauschanzeige verbunden ist, umfasst.

7. Melksystem nach einem der vorhergehenden Ansprüche, wobei sich der Betriebsparameter auf eine Luftdurchflussmenge in dem Unterdrucksystem bezieht.

8. Verfahren zum automatischen Testen eines Unterdrucksystems eines Melksystems (1), wobei das Melksystem mehrere Melkvorrichtungen (2-6) zum Melken von Milchvieh, ein Unterdrucksystem zum Erzeugen eines Unterdrucks zum Melken und einer Pulsation in den mehreren Melkvorrichtungen, und eine Steuereinheit (14) zum Steuern zumindest des Unterdrucksystems umfasst,
wobei das Unterdrucksystem N Unterdruckpumpen (11-13) von im Wesentlichen identischer Kapazität, umfasst, wobei N ≥ 3,
wobei das Unterdrucksystem auch eine Messvorrichtung (10) umfasst, die mit der Steuereinheit betriebstechnisch verbunden ist, um einen Wert zumindest eines Betriebsunterdruckparameters des Unterdrucksystems zu bestimmen,
wobei das Verfahren für mindestens 2 und vorzugsweise für jede der N Unterdruckpumpen die folgenden Schritte der Steuereinheit umfasst:
a) Ausschalten der Unterdruckpumpe und Einschalten der anderen N-1 Unterdruckpumpen;
b) Bestimmen des Wertes des Betriebsunterdruckparameters des Unterdrucksystems; und
c) Bestimmen auf der Grundlage der für jede abgeschaltete Unterdruckpumpe bestimmten Betriebsparameterwerte, wenn eine der Unterdruckpumpen Wartung benötigt, und auch welche Pumpe die Wartung benötigt.

9. Verfahren nach Anspruch 8, wobei das Unterdrucksystem mit den Unterdruckpumpen ausgelegt ist, einen Referenzwert für den Betriebsunterdruckparameter für jede Teilmenge von N-1 Unterdruckpumpen erzielen zu können.

10. Verfahren nach Anspruch 8 oder 9, wobei der Schritt c) das Bestimmen umfasst, dass eine Pumpe X Wartung benötigt, wenn entweder das Ausschalten dieser Unterdruckpumpe X und das Einschalten einer der anderen Unterdruckpumpen, oder das Einschalten dieser Unterdruckpumpe X und das Ausschalten einer der anderen Pumpen eine Änderung des Betriebsparameterwerts um einen vorgegebenen Wert und/oder einen vorgegebenen Prozentsatz zur Folge hat.

11. Verfahren nach Anspruch 10, wobei der vorgegebene Wert oder der vorgegebene Prozentsatz einen ersten Schwellenwert oder Schwellenwertprozentsatz, der mit einer Wartungsanzeige verbunden ist, umfasst.

12. Verfahren nach Anspruch 10 oder 11, wobei der vorgegebene Wert oder der vorgegebene Prozentsatz einen zweiten Schwellenwert oder Schwellenwertprozentsatz, der mit einer Austauschanzeige verbunden ist, umfasst.

13. Verfahren nach einem der Ansprüche 8-12, wobei sich der Betriebsparameter auf eine Luftdurchflussmenge in dem Unterdrucksystem bezieht.

## Revendications

1. Système (1) de traite comprenant une pluralité de dispositifs (2-6) de traite pour traire des animaux laitiers, avec d'un système de vide pour produire une dépression pour la traite et/ou une pulsation dans la pluralité de dispositifs de traite, et avec d'une unité (14) de commande servant à commander au moins le système de vide,
le système de vide comprenant N pompes à vide (11, 12, 13) de capacité sensiblement identique, avec N ≥ 3, dans lequel le système de vide comprend également un dispositif de mesure (10) qui est relié fonctionnellement à l'unité de commande pour déterminer une valeur d'au moins un paramètre de vide de fonctionnement du système de vide,
**caractérisé en ce que**
l'unité de commande est configurée de telle façon que, lors d'une action de test automatique pour au moins 2, et de préférence pour chacune, des N pompes à vide, elle
a) éteint ladite pompe à vide et allume les N-1 autres pompes à vide ;
b) détermine la valeur du paramètre de vide de fonctionnement du système de vide ; et
c) détermine, d'après les valeurs de paramètres de fonctionnement déterminées pour chaque pompe à vide qui a été éteinte, si l'une des pompes à vide nécessite une maintenance et également quelle pompe à vide nécessite ladite maintenance.

2. Système de traite selon la revendication 1, le système de vide avec des pompes à vide étant conçu pour pouvoir atteindre une valeur de référence du paramètre de vide de fonctionnement pour chaque sous-ensemble de N-1 pompes à vide.

3. Système de traite selon la revendication 1 ou 2, les pompes à vide présentant une capacité de pompe qui peut être réglée par l'unité de commande et l'unité de commande étant configurée pour allumer les N-1 pompes à une capacité de pompe identique, en particulier maximum.

4. Système de traite selon l'une des revendications précédentes, l'unité de commande étant configurée pour déterminer en c) qu'une pompe X nécessite une maintenance si le fait soit d'éteindre cette pompe à vide X et d'allumer une des autres pompes à vide, soit d'allumer cette pompe à vide X et d'éteindre une des autres pompes se traduit par une variation de la valeur du paramètre de fonctionnement d'au moins une valeur prédéterminée ou un pourcentage prédéterminé.

5. Système de traite selon la revendication 4, la valeur prédéterminée ou le pourcentage prédéterminé comprend une première valeur seuil ou un premier pourcentage seuil associés à une indication de maintenance.

6. Système de traite selon la revendication 4 ou 5, la valeur prédéterminée ou le pourcentage prédéterminé comprend une seconde valeur seuil ou un second pourcentage seuil associés à une indication de remplacement.

7. Système de traite selon l'une des revendications précédentes, le paramètre de fonctionnement se rapportant à un débit d'air dans le système de vide.

8. Procédé de test automatique d'un système de vide d'un système (1) de traite, ledit système de traite comprenant une pluralité de dispositifs (2-6) de traite pour traire des animaux laitiers, un système de vide servant à produire une dépression pour la traite et/ou une pulsation dans la pluralité de dispositifs de traite, et une unité (14) de commande servant à commander au moins le système de vide,
dans lequel le système de vide comprend N pompes à vide (11-13) de capacité sensiblement identique, avec N ≥ 3, dans lequel le système de vide comprend également un dispositif de mesure (10) qui est relié fonctionnellement à l'unité de commande pour déterminer une valeur d'au moins un paramètre de vide de fonctionnement du système de vide,
dans lequel le procédé comprend, pour au moins 2, et de préférence pour chacune, des N pompes à vide, les étapes consistant pour l'unité de commande à :
a) éteindre ladite pompe à vide, et allumer les N-1 autres pompes à vide ;
b) déterminer la valeur du paramètre de vide de fonctionnement du système de vide ; et
c) déterminer, d'après les valeurs de paramètres de fonctionnement déterminées pour chaque pompe à vide qui a été éteinte, si l'une des pompes à vide nécessite une maintenance et également quelle pompe à vide nécessite ladite maintenance.

9. Procédé selon la revendication 8, le système de vide avec des pompes à vide étant conçu pour pouvoir atteindre une valeur de référence du paramètre de vide de fonctionnement pour chaque sous-ensemble de N-1 pompes à vide.

10. Procédé selon la revendication 8 ou 9, l'étape c) comprenant le fait de déterminer qu'une pompe X nécessite une maintenance si le fait soit d'éteindre cette pompe à vide X et d'allumer une des autres pompes à vide, soit d'allumer cette pompe à vide X et d'éteindre une des autres pompes se traduit par une variation de la valeur du paramètre de fonctionnement d'au moins une valeur prédéterminée ou un pourcentage prédéterminé.

11. Procédé selon la revendication 10, la valeur prédéterminée ou le pourcentage prédéterminé comprend une première valeur seuil ou un premier pourcentage seuil associés à une indication de maintenance.

12. Procédé selon la revendication 10 ou 11, la valeur prédéterminée ou le pourcentage prédéterminé comprend une seconde valeur seuil ou un second pourcentage seuil associés à une indication de remplacement.

13. Procédé selon l'une des revendications 8 à 12, le paramètre de fonctionnement se rapportant à un débit d'air dans le système de vide.
